Europäisches Patentamt

European Patent Office

Office européen des brevets

(11) Publication number: **0 095 902**
A1

# EUROPEAN PATENT APPLICATION

(21) Application number: **83303049.7**

(22) Date of filing: **26.05.83**

(51) Int. Cl.³: **H 02 H 7/00, H 04 R 3/00**

(30) Priority: **28.05.82 GB 8215812**
**09.03.83 GB 8306495**

(43) Date of publication of application: **07.12.83**
**Bulletin 83/49**

(84) Designated Contracting States: **DE FR IT NL SE**

(71) Applicant: **BRITISH BROADCASTING CORPORATION, Broadcasting House, London W1A 1AA (GB)**

(72) Inventor: **Lacey, Philip Edwin James, 12 Chaworth Road, Ottershaw Nr. Chertsey Surrey, KT16 OPE (GB)**

(74) Representative: **Abnett, Richard Charles et al, REDDIE & GROSE 16 Theobalds Road, London WC1X 8PL (GB)**

(54) **Headphone level protection circuit.**

(57) A headphone level protection circuit provides hearing protection for the user of headphones (12) and has input terminals (10) connected to an audio signal source (20) and output terminals (11) for connection to the headphones (12), with a series resistance (1) between them. A first threshold circuit (9) responds to the input signal instantaneously exceeding a maximum level to provide a first control signal to an OR-gate (8). A second threshold circuit (7) responds to the input signal exceeding a second lower maximum level for a longer duration to provide a second control signal to the OR-gate. The second threshold circuit (7) receives the input signal after spectrum shaping, firstly in an «A» weighting circuit (3) and secondly in a circuit (4) which mimics the headphone response, followed by rectification (5) and averaging or integration (6) for a desired time period, this being effective over both half-cycles of the audio signal. A controlled electronic switch (2) constituted by one or more triacs or transistors is connected across the output terminals to reduce the signal applied to the output such as to provide foldback limiting. The whole circuit receives its power from the input signal without the need for an auxiliary power source. Thermistors may be included to reduce the power dissipation after triggering has occurred.

0095902

## HEADPHONE LEVEL PROTECTION CIRCUIT

This invention relates to a level protection circuit for use with headphones.

We have found that listeners choose an appreciably higher listening level when using headphones than when using loudspeakers. Factors leading to this are:

(i)   A headphone listener may choose a high listening level without disturbing anyone else.

(ii)  At high levels a loudspeaker-amplifier system distorts and thus gives warning: a headphone-amplifier system does not.

(iii) The physical sensations to feet and chest provided by a loudspeaker are not present when listening on headphones.

In addition to this tendency, the following operational circumstances may give rise to high sound levels:

(iv)  In broadcasting, high ambient sound levels prevail which leads to higher listening levels, both for effective quality monitoring or balancing operation, and for intelligibility of communication in the presence of high background noise.

(v)   The sound feed to the headphone system may be subject to disturbances by a person not aware of the resultant headphone level.  This can occur when a programme source is selected or level adjustment made.

(vi)  If 8 Ohm headphones are inadvertently connected to a loudspeaker amplifier output, sound levels in excess of 140 dB are possible.

Clearly, headphones are potentially capable of causing hearing damage.

Two forms of hearing damage can occur, firstly intense sounds higher than 150 dB can cause instantaneous damage while prolonged exposure to sounds in excess of 90 dB (A) can cause progressive loss.

The design of protection for headphone wearers presents a number of problems:

(a)     The variable and extreme peak-to-mean ratio of speech and music restricts the use of simple peak clippers, as their action is audible on peaks of the programme signal although the average programme level may be much lower than the clipper level.

(b)     The energy output of a conventional clipper circuit continues to increase with progressive overdrive due to waveform squaring.

(c)     No distortion should occur until protective action is initiated.

Prior proposals have been made for audio protection circuits for use with loudspeakers, see for example British Patent GB-PS 1 380 151. There are important differences between loudspeaker and headphone circuits, however. Loudspeaker power and voltage levels are very different from those encountered in headphones, and there is no need for the circuit to be as portable or as robust. Normally loudspeakers have low impedances which preclude the use of resistive elements in the signal path. British Patent 1 380 151 is for use with electrostatic loudspeakers to stop the loudspeaker elements approaching too close to each other and touching; it is thus only concerned with overvoltages in one direction. The specific response times which we have found to be important for headphones do not apply to loudspeakers. There are many other differences.

The present invention is concerned to ameliorate at least to some extent some of the disadvantages of the known systems.

The invention in its various aspects is defined in the appended claims, to which reference should now be made.

A preferred headphone level protection circuit embodying the invention and providing protection for the user of headphones and having input terminals connected to an audio signal source and output terminals for connection to headphones, will be described. Between the input and output terminals is a series resistance. A first threshold circuit responds to the input signal instantaneously exceeding a maximum level to provide a first control signal to an OR-gate. A second threshold circuit responds to the input signal exceeding a second, lower maximum level for a longer duration, to provide a second control signal to the OR-gate. The second threshold circuit receives the input signal after spectrum shaping, firstly in an 'A' weighting circuit and secondly in a circuit which mimics the headphone response, followed by full-wave rectification and averaging or integration for a desired time period.

A controlled electronic switch, constituted by one or more triacs or transistors, is connected across the output terminals to reduce the signal applied to the output such as to provide fold-back limiting. The electronic switch receives the output of the OR-gate as a control signal which is applied to the gate of the switch through a gate resistor. The whole circuit receives its power from the input signal without the need for an auxiliary power source.

The invention will be described by way of example with reference to the drawings, in which:

Figure 1 is a block diagram of a headphone level protection circuit embodying the invention;

Figure 2 is a more detailed circuit diagram based upon Figure 1 for use with low impedance headphones;

Figure 3 is a detailed circuit diagram of a modification of the circuit of Figure 2 for use with high impedance headphones;

Figure 4 is a circuit diagram of a modification of the circuit of Figure 2 employing thermistors.

- 4 -                                              0095902

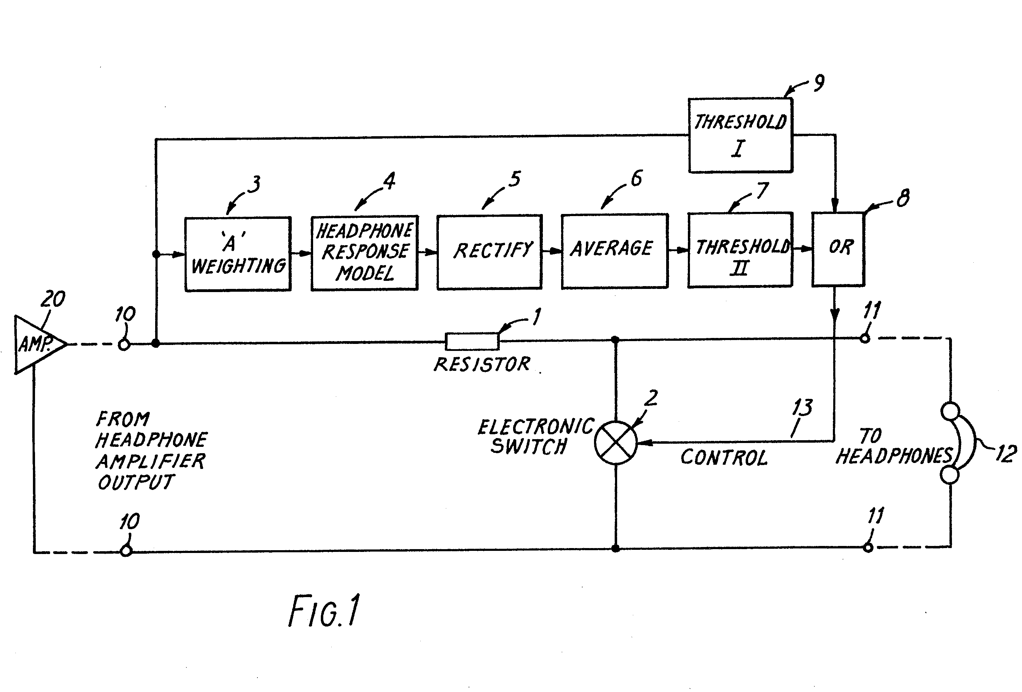

The headphone protection circuit illustrated in Figure 1 includes terminals 10 which in use are connected to the headphone output socket of an amplifier 20. The circuit includes output terminals 11 to which headphones 12 can be connected. Between the input terminals 10 and the output terminals 11 is a series resistance 1. Across the output terminals is an electronic switch 2 controlled by a control input 13. The switch 2 may conveniently be either a triac or a pair of transistors. A triac has the advantage of a lower saturation voltage at the high currents which can arise in low impedance (e.g. 8 ohm) circuits.

The control circuitry is shown in the upper part of the figure, and consists of two control chains forming side chains to the main signal path. The outputs of the two chains are combined in an OR-gate 8 for application to the control input 13 of switch 2. Thus either of the control chains may operate the switch. However, neither of the control chains lies in the signal path to the output terminals 11. The first chain consists of a threshold circuit 9 connected between the input 10 and OR-gate 8. This threshold circuit provides a first threshold giving instantaneous cut-off for very high level signals, approaching the level at which instantaneous damage to hearing can occur. A typical value for this would correspond to a signal level of 130 dB.

The second chain between the input terminals 10 and the OR-gate 8 includes an 'A' weighting network 3 which corresponds to the standard A-weighted measurements of perceived noise decibels used in safety measurements. Any other suitable ear damage criterion could of course be used. The 'A' weighting network 3 allows higher level signals in the less damaging (lower) frequencies to pass in the signal chain before limiting takes place. To the output of this network is a further network 4 which takes account of and indeed mimics the frequency response of the headphones. By providing an electrical analogue of the headphone electro-acoustical response, this circuit 4 prevents those signals which will be reproduced at a low level because of the headphone frequency response shortfall from triggering the protection switch. This enables the maximum permitted output to be achieved over the frequency band before limiting takes place.

It will be appreciated that the network 4 may be omitted for headphones with a flat frequency response. Alternatively, it can be combined with the A-weighting network 3. For the case where the headphones have a rising low frequency response, an adjustment to the low frequency turnover point of network 3 will achieve the required result. In any event the circuits 3 and/or 4 provide a spectrum shaping function which, it should be noted, does not affect the spectrum of the normal signal applied to the output terminals 11.

The output of network 4 is applied to a rectifier 5. The rectifier output signal is averaged in an averager or integrating circuit 6 which has a defined delay time which may be at least a few cycles of the audio signal. This prevents short-term peaks from triggering the protection switch. The averaging time in this example may be 125 ms or 1 second, though shorter times of down to about 2.5ms could be of some benefit. The output of averager 6 is then applied to a second threshold circuit 7 which is set at a value corresponding to that at which prolonged exposure to the sound might cause progressive hearing loss. Typically, for an 8 hour day, the threshold circuit would be set to correspond with a level of 90 dB(A), with a 3 dB increase for each halving of the period of exposure. A typical range of values would, therefore, be 90 to 115 dB(A).

Thus, it will be seen that the second control chain provides protection at a lower level than that given by the first, but which is tailored to the response of the ear, enabling the maximum subjective level of sound consistent with protection .

It will be seen that the control chain used is a feed forward arrangement, in that it is directly connected to the input terminals 10, and is not supplied from a point subsequent to the resistance 1. This ensures that the output level can be reduced to a lower level than the threshold level for all levels in excess of the threshold level. Once the threshold is exceeded, if the switch 2 is a triac, there will be a sudden transition to a lower level, whereas if it is formed of transistors it will give a progressive clipping action, which is subjectively advantageous.

As the signals are a.c. signals a simple half-wave rectifier cannot be used as the rectifier 5. A full wave rectifier could be used, but in typical low impedance headphone circuits, the voltage swings are low. It is, therefore, advantageous to duplicate the rectification, averaging and threshold circuits, coupled with the OR-gate 8 and switch 2. Positive and negative signals are then applied separately to the respective control chain. This avoids the double diode voltage drop which is inherent in full-wave rectification. Nevertheless, the circuit provides protection against amplitude swings in both directions on an a.c. signal.

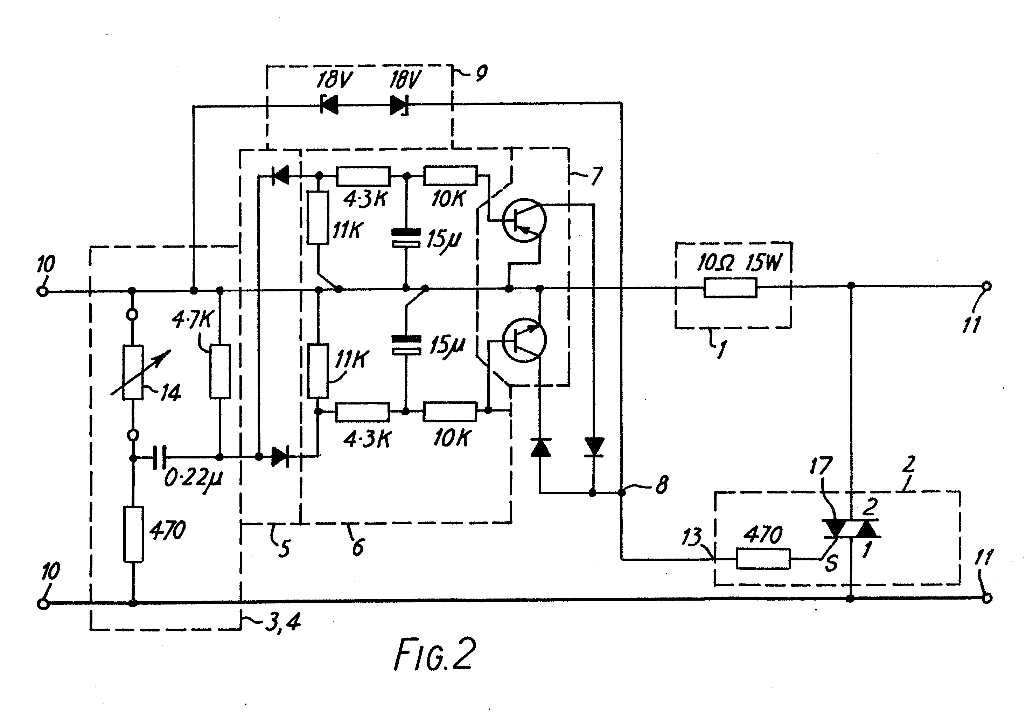

Figure 2 shows a more detailed circuit diagram of a protection circuit for use with a low impedance headphone output, e.g. 8 ohms. The circuit is designed for use with headphones having a slightly rising low frequency response below 1 Khz, and thus the 'A' weighting network frequency turnover is set low. The circuit is designed to provide instantaneous protection at 130 dB and longer term protection at 115 dB(A) with 125 ms averaging. The principal elements of the circuit are numbered with the same references as given in Figure 1. The circuit uses a triac 17 as the switch 2, fed by separate positive and negative control chains. Opposed Zener diodes provide the high level threshold 9. It should be noted that the long-term threshold is provided by the inherent threshold at the base-emitter junction of the transistors 7, and is adjusted by use of a variable resistor 14 in the circuit prior to the networks 3 and 4 of Figure 1. The use of the half-wave rectification and the base-emitter junction enables the circuit to be made very sensitive at low voltage levels. Nevertheless the circuit will respond to over-voltages in both polarities.

Once the triac 17 has been triggered it remains latched until the next zero crossing. This provides 'foldback' limiting: that is, once the threshold level is exceeded the output is reduced to <u>below</u> the threshold level. The limited output is substantially independent of input waveform amplitude or waveshape.

As shown in Figure 2 the charging and discharging impedance for the 15μ capacitors in the averaging circuit 6 are seen to be different. However it should be remembered that because of the half-wave rectification, the charge time is only half a cycle and is thus half the discharge time, so that the effective charge and discharge rates are approximately equal.

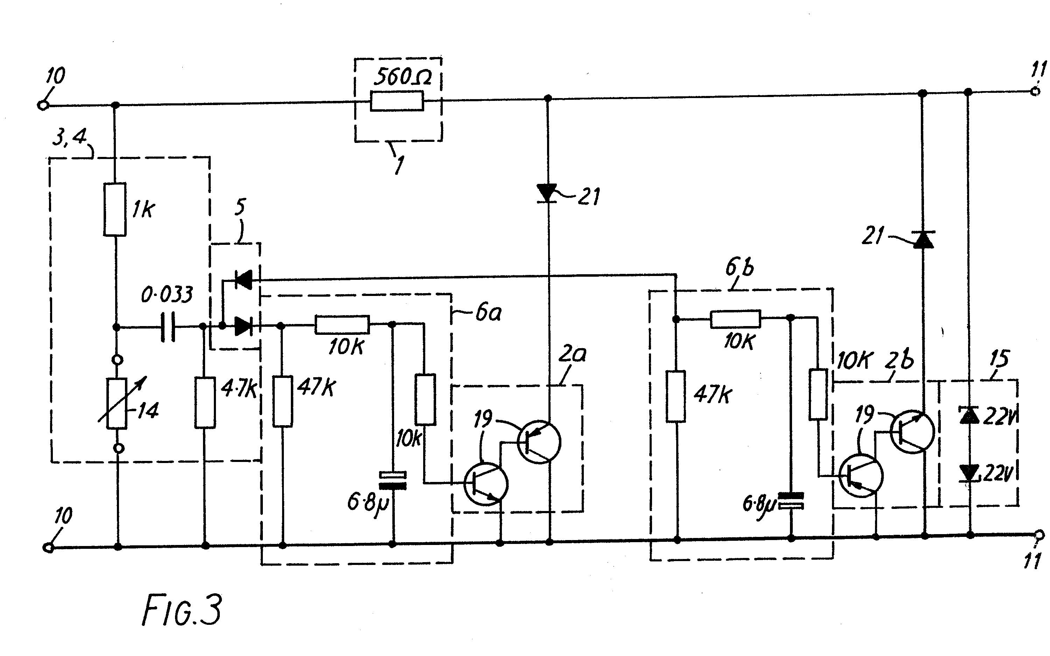

Figure 3 is a similar circuit for use with higher impedance headphones e.g. 600 ohms. This circuit operates at 130 dB and 105 dB(A) with 125 ms averaging. Transistors 19 are used to constitute the shunt switch. The transistor switch 2 is in fact constituted by two separate switches 2a, 2b operated respectively by the positive and negative incursions of the input signal. Again, foldback limiting is achieved because increasing input energy gives increasing shunt action. Because the circuit impedances are higher, the instantaneous high level protection does not use the transistor switch 2 but is provided separately by Zener diodes 15.

The triac 17 in Figure 2 and transistors 19 in Figure 3 forming the electronic switch 2 provide a low ON voltage so that when the device is triggered current passes freely through this switch with the devices saturating. In Figure 3 the saturation voltage is arranged to be less than the threshold voltage. Also in Figure 3 diodes 21 inhibit current flow on the 'wrong' half-cycles, but for low level signals they can be omitted and reliance placed on the rectification in the transistors 19.

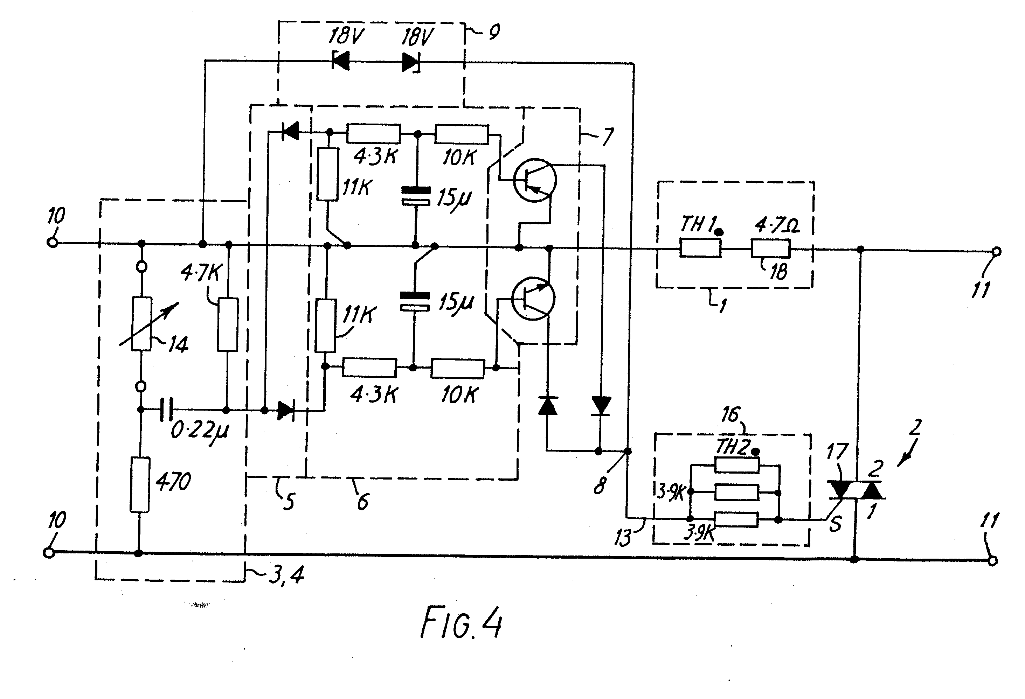

Figure 4 shows an improvement on the circuit of Figure 2. When the electronic switch 2 is rendered conductive to provide safety sound level protection, the power required to be dissipated in the series resistance 1 increases considerably. Typically, before the shunt switch is operated, power is shared between the series resistor and the headphones in that half the power is dissipated in the series resistor and half in the headphones. When the electronic switch goes conductive, nearly all the power will be dissipated in the series network and the power dissipation will be four times its previous value. This requires a high power rating for the series resistor which creates problems.

Now referring to Figure 4 it will be seen that the series resistance 1 in this case comprises a combination of a fixed resistor 18 and a thermistor TH1 connected in series. The thermistor is a temperature sensitive resistor having a positive temperature coefficient. Alternatively, an appropriate thermistor could be used by itself, or another network of resistors and thermistors adopted. The series resistance 1 behaves as a linear resistor for signal levels which are below a value sufficient to trigger the electronic switch 2. However, at a level above this, when the shunt protection has operated, excess power is dissipated in the series network, causing an increase of the thermistor temperature and hence in its resistance. This has the effect of decreasing the power dissipated to a level which is lower than would be dissipated by a linear resistance. Thus the thermistor operates in an indirect manner to improve the attenuation after triggering.

The thermistor characteristics should be chosen to maintain so far as possible substantial temperature-independence over a normal ambient range, and permit rapid recovery of signal level following protective action. Otherwise it might be possible for the signal level (and intelligibility) to be lost for a considerable period following protective action. In the circuit illustrated we have found an STC type YR 115 D 220 B100 thermistor to be suitable.

The triac 17 constituting the electronic switch 2 has a gate resistance network in this case formed by a thermistor TH2 in parallel with fixed resistors.    The thermistor TH2 can suitably be an STC type YM 080 C 21 B501.    This thermistor network 16 is chosen to reduce the dissipated power.    The action is straightforward, the criterion being that trigger sensitivity should not be lost following prolonged protective action (triggering of the electronic switch).

It will be seen that the circuits illustrated have the advantage that no additional source of power is required other than that present in the audio signal itself, which is particularly desirable for headphone use.     A measure of frequency shaping is applied to the control signal to reduce the degree of limitation of the signals in frequency ranges which cause less hearing damage, because either the headphones or the listener's ear is less sensitive at those frequencies.    A time delay is inherent in the long-term control signal generation which prevents short-term peaks, which are present in speech and music, from triggering the protection.    A useful guide to suitable values for the time constant of the averaging circuit is to be found in the values set down for safety meters for measuring acoustic output.    The circuits are small and light, making them easily portable, and are resistant to vibration, having no relay devices.    The circuits may be sufficiently small to be incorporated in the headphone unit.    The circuits can be made at an economical price which is desirable for headphone use, otherwise the circuit becomes an appreciable fraction of the headphone cost.    The circuits operate without introducing any noticeable distortion into the signal, until, of course, the signal is sufficient to trigger the protective switch.    In particular, no compression of the dynamic range occurs below the trigger point.    The circuits also protect headphones from damage.

## CLAIMS

1.      A headphone level protection circuit for providing hearing protection for a headphone user, comprising:

input terminals for connection to an audio signal source;

output terminals for connection to headphones;

resistance means in series between the input and output terminals in the audio signal path;

controlled electronic switch means coupled across the output terminals;

signal control means directly connected to the input terminals and forming a side chain to the audio signal path, and responsive to the input signal exceeding a predetermined level to provide a control signal for the switch means;  and

headphones for connection to the output terminals.

2.      A protection circuit according to claim 1, in which the signal control means is operative to reduce the signal applied to the output terminals to a level below that corresponding to the said predetermined level.

3.      A protection circuit according to claim 1, in which the signal control means is responsive to the input signal exceeding the predetermined level for a predetermined time greater than  2.5ms.

4.      A protection circuit according to claim 1, in which the signal control means is responsive to both polarities of an alternating audio input signal.

5.      A protection circuit according to claim 1, in which the signal control means includes a spectrum shaping circuit for modifying the input signal before comparison with the said predetermined level.

6.    A protection circuit according to claim 1, including further signal control means responsive to the input signal instantaneously exceeding a maximum level to reduce the signal applied to the output terminals.

7.    A protection circuit according to claim 1, in which the controlled electronic switch comprises a triac.

8.    A headphone level protection circuit for providing hearing protection for a headphone user, comprising:
        input terminals for connection to an audio signal source;
        output terminals for connection to  headphones;
        signal control means responsive to the input signal exceeding a predetermined level to reduce the signal applied to the output terminals to a level below that corresponding to the said predetermined level (foldback limiting);  and
        headphones for connection to the output terminals.

9.    A headphone level protection circuit for providing hearing protection for a headphone user, comprising:
        input terminals for connection to an alternating audio signal source;
        output terminals for connection to headphones and connected to the input terminals by an audio signal path;
        signal control means connected to the input terminals and forming a side chain to the audio signal path and responsive to the input signal exceeding a predetermined level for a predetermined time greater than the period of the audio signal to reduce the amplitude of the signal applied to the output terminals;  and
        headphones for connection to the output terminals.

10.    A protection circuit according to claim 9, in which the said predetermined time is not less than 2.5 ms.

11. A protection circuit according to claim 9, including an averaging or integrating circuit operative on the input signal before comparison with the said lower or predetermined level.

12. A headphone level protection circuit for providing hearing protection for a headphone user, comprising:

input terminals for connection to an alternating audio signal source;

output terminals for connection to headphones and connected to the input terminals by an audio signal path;

signal control means connected to the input terminals and forming a side chain to the audio signal path and responsive to the input signal exceeding a predetermined level to reduce the signal applied to the output terminals, the control means being operative on both polarities of the audio signal; and

headphones for connection to the output terminals.

13. A protection circuit according to claim 12, in which the control means comprises separate control circuits for the positive and negative signal polarities.

14. A headphone level protection circuit for providing hearing protection for a headphone user, comprising:

input terminals for connection to an audio signal source;

output terminals for connection to headphones and connected to the input terminals by an audio signal path;

signal control means connected to the input terminals and forming a side chain to the audio signal path, and responsive to the input signal exceeding a predetermined level to reduce the signal applied to the output terminals, the signal control means including a spectrum shaping circuit for modifying the input signal before comparison with the said level; and

headphones for connection to the output terminals.

15.      A protection circuit according to claim 14, in which the spectrum shaping circuit is operative on the input signal in accordance with an ear damage criterion.

16.      A protection circuit according to claim 15, in which the spectrum shaping circuit is operative on the input signal to provide an 'A' weighting function.

17.      A protection circuit according to claim 14, in which the spectrum shaping circuit is operative on the input signal to provide compensation for headphone response.

18.      A headphone level protection circuit for providing hearing protection for a headphone user, comprising:
         input terminals for connection to an audio signal source;
         output terminals for connection to headphones;
         first signal control means responsive to the input signal instantaneously exceeding a first maximum level to reduce the signal applied to the output terminals;
         second signal control means responsive to the input signal exceeding a second lower maximum level for a longer duration to reduce the signal applied to the output terminals; and
         headphones for connection to the output terminals.

19.      A protection circuit according to claim 18, in which the first and second signal control means are provided with a single switch element and comprise separate control circuits therefor.

20.      A headphone level protection circuit for providing hearing protection for a headphone user, comprising:
         input terminals for connection to an audio signal source;

- 14 -

0095902

output terminals for connection to headphones;

resistance means in series between the input and output terminals in the audio signal path;

first signal control means directly connected to the input terminals and forming a side chain to the audio signal path, and responsive to the input signal instantaneously exceeding a maximum level to provide a first control signal;

second signal control means directly connected to the input terminals and forming a side chain to the audio signal path, and responsive to the input signal exceeding a second lower maximum level for a predetermined longer duration greater than the period of the audio signal to provide a second control signal, the second signal control means being operative on both polarities of the audio signal, and including a spectrum shaping circuit for modifying the input signal before comparison with the said lower level;

controlled electronic means responsive to the control signals and connected across the output terminals to reduce the signal applied to the output to a level below that corresponding to the predetermined level; and

headphones for connection to the output terminals;

the signal control means and the said electronic means being powered from the input signal.

FIG.1

FIG.2

FIG.3

3/4

0095902

FIG.4

**European Patent Office**

**EUROPEAN SEARCH REPORT**

Application number

EP 83 30 3049

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-B-2 756 159 (GULLFIBER AB) * Claims 1, 2; figures 3, 4 * | 1,7-9 12-14 | H 02 H 7/00 H 04 R 3/00 |
| Y | | 4 | |
| X | DE-A-1 908 033 (WSZ-ELEKTRONIK) * Claim 1; pages 5-6; figures 1a, 1b, 2 * | 1,7-9 12-14 | |
| A | | 18,20 | |
| Y | GB-A-1 123 799 (SIEMENS-SCHUCKERTWERKE) * Page 1, line 55 - page 2, line 52; figure * | 4 | |
| A | DE-B-2 038 217 (SIEMENS AG) * Claim 1; figure 2 * | 18,20 | TECHNICAL FIELDS SEARCHED (Int. Cl. 3) H 02 H 3/20 H 02 H 7/00 H 02 H 9/02 H 02 H 9/04 H 04 R 3/00 |
| A | GB-A-2 023 361 (ESQUIRE INC.) * Abstract; figure 2 * | | |
| A | US-A-3 878 434 (E.W. VORRHOEVE) * Abstract; figure 1, references 40, 52, 54 * | | |
| D,A | GB-A-1 380 151 (STANTON MAGNETICS INC.) * Claim 1; figure * | | |

The present search report has been drawn up for all claims

| Place of search BERLIN | Date of completion of the search 17-08-1983 | Examiner LEMMERICH J |
|---|---|---|